# EUROPEAN PATENT APPLICATION

(11) **EP 1 275 705 A1**
(43) Date of publication of application: **15.01.2003**
(21) Application number: 01917526.4
(22) Date of filing: 28.03.2001
(51) Int. Cl.: C09D 183/04, C09D 5/16

(54) **ANTIFOULING COATING COMPOSITION**

(30) Priority: 28.03.2000 JP 2000087858
(71) Applicant: KANSAI PAINT CO., LTD., Amagasaki-shi, Hyogo-ken 661-8555 (JP)
(72) Inventor: KISHIHARA, Masato, Kanagawa 256-0802 (JP); HORI, Makoto, Kansai Paint Co., Ltd., Ota-ku, Tokyo 146-0091 (JP); MURAMATSU, Toshimitsu, Kanagawa 238-0032 (JP); YONEHARA, Yoichi, Kanagawa 253-0084 (JP)
(74) Representative: Albrecht, Thomas, Dr.
(86) International application number: JP0102543
(87) International publication number: WO01072915

(57) **Abstract**

The present invention provides an antifouling coating composition which comprises (a) an organopolysiloxane having a crosslinkable reactive functional group, (b) a crosslinking agent, (c) a boric acid compound as a curing catalyst and (d) a silicone oil having a number average molecular weight of 180 to 30,000 and a viscosity of 10 to 50,000 mPa·s and which is nontoxic and mild to the environment.

## Description

### Technical Field

The present invention relates to a nontoxic antifouling coating composition which does not contain toxic components and is mild to the environment, more specifically to an antifouling coating composition which can be coated on ships, port facilities, buoys, pipelines, bridges, conducting tubes in electric power stations, submarine bases, submarine oil field drilling facilities, cultivation nets and fixed shore nets (hereinafter generically called "underwater structures") to form an antifouling coating film for preventing underwater organisms from sticking and growing on the surfaces thereof over a long period of time.

### Background Art

A lot of organisms such as, for example, a barnacle, a sea squirt, a celpra, a mussel, a fresh-water mussel, a green laver and a sea lettuce live in the water in seas, rivers and lakes, and when underwater structures are set up or circumnavigated in such water, organisms stick and grow on the surfaces of the splash part (draft parts) thereof to produce various damages.

Antifouling coating compositions blended with toxic antifouling agents such as organic tin compounds have so far been used in order to prevent underwater organisms from sticking onto underwater structures. The above antifouling coating compositions are very excellent in an antifouling property but have a strong toxicity, so that they have had problems on environmental conservation and safety and sanitation. Thus, silicon rubber base antifouling coating compositions which form a coating film of silicon rubber alone or a mixture of silicon rubber and silicone oil are proposed as a nontoxic antifouling coating composition [for example, Japanese Patent Application Laid-Open No. 96830/1976 (= U.S Patent 4025693), Japanese Patent Publication No. 26272/1981, Japanese Patent Application Laid-Open No. 43973/1988 (= U.S Patent 4025693) and Japanese Patent Application Laid-Open No. 255169/1991 (= U.S Patent 5218059)].

However, toxic organic tin compounds are usually used as a curing catalyst for these antifouling coating compositions, and a use amount thereof is very small but, it is desired from a viewpoint of environmental conservation that they are not used.

The present inventors have intensively investigated a nontoxic curing catalyst substituted for an organic tin compound in the silicon rubber base antifouling coating compositions described above, and as a result thereof, they have found that the same curing property and coating film performances as obtained when using an organic tin compound can be obtained by using a nontoxic boric acid compound as a curing agent, and they have come to complete the present invention.

### Disclosure of the Invention

Thus, the present invention provides an antifouling coating composition comprising (a) an organopolysiloxane having a crosslinkable reactive functional group, (b) a crosslinking agent, (c) a boric acid compound as a curing catalyst and (d) a silicone oil having a number average molecular weight of 180 to 30,000 and a viscosity of 10 to 50,000 mPa·s.

The antifouling coating composition of the present invention shall be explained below in further details.

### Organopolysiloxane (a)

The organopolysiloxane (a) which is used as a film-forming component in the antifouling coating composition of the present invention can be cured at a low temperature, that is, about 80°C or lower, preferably about 50°C or lower and more preferably room temperature in the presence of a crosslinking agent and a curing catalyst each described later and a moisture (may be a moisture in the air) to form silicone rubber, and compounds used in conventional silicone rubber base antifouling coating compositions can similarly be used. To be specific, they have crosslinkable reactive functional groups at both ends in a molecular chain and organic groups other than the above crosslinkable reactive functional groups bonded to Si in a molecular chain, and the above crosslinkable reactive functional groups include, for example, a hydroxyl group; an alkoxy group such as methoxy, ethoxy, propoxy and isopropoxy; and an aralkyloxy group such as benzyloxy. Further, the above organic groups include organic groups which are usually present in organopolysiloxanes, for example, an alkyl group such as methyl, ethyl and propyl; a cycloalkyl group such as cyclopentyl and cyclohexyl; an alkenyl group such as vinyl and allyl; a haloalkyl group such as 3,3,3-trifluoropropyl and nanofluorohexyl; an aryl group such as phenyl, tolyl and naphthyl; and an aralkyl group such as benzyl and phenethyl. In the present invention, among them, methyl is particularly suited.

The organopolysiloxane (a) described above can have a number average molecular weight falling in a range of usually 2,000 to 100,000, preferably 10,000 to 80,000 and more preferably 20,000 to 60,000. Further, the organopolysiloxane (a) described above can contain a crosslinkable reactive functional group in a functional group equivalent (molecular weight per functional group) falling in a range of usually 1,000 to 50,000, particularly 5,000 to 40,000.

In the present invention, in particular, an organopolysiloxane (a-1) of a relatively high molecular weight having a number average molecular weight falling in a range of 20,000 to 100,000, particularly 20,000 to 60,000 is preferably used in combination with an organopolysiloxane (a-2) of a relatively low molecular weight having a number average molecular weight falling in a range of 500 to 20,000, particularly 2,000 to 15,000. A use proportion thereof falls suitably in a range of usually 5/95 to 95/5, particularly 20/80 to 80/20 and further particularly 40/60 to 80/20 in terms of a weight ratio of organopolysiloxane (a-1)/organopolysiloxane (a-2) from the viewpoints of a long-term antifouling property and a thick film-forming property.

### Crosslinking agent (b)

The crosslinking agent (b) for three-dimensionally crosslinking the organopolysiloxane (a) described above to form a silicone rubber includes multifunctional silane compounds which have in a molecule, at least two functional groups hydrolyzed in the presence of a moisture (may be a moisture in the air) to react with a crosslinkable reactive functional group contained in the organopolysiloxane (a), for example, an acyloxy group such as acetoxy, octanoyloxy and benzoyloxy; an alkoxy group such as methoxy, ethoxy and propoxy; a ketoxime group such as methyl ethyl ketoxime and diethyl ketoxime; an alkenyloxy group such as isopropenyloxy and 1-ethyl-2-methylvinyloxy; a mono- or dialkylamino group such as dimethylamino, diethylamino and butylamino; and a mono- or dialkylaminoxy group such as dimethylaminoxy and diethylaminoxy and which can have, if necessary, the organic groups described above.

Such multifunctional silane compounds include, for example, methyl-tris(methyl ethyl ketoxime)silane, vinyl-tris(methyl ethyl ketoxime)silane, tetra(methyl ethyl ketoxime)silane, methyltri(N,N-diethylamino)silane, methyltriacetoxysilane, tetramethoxysilane, tetraethoxysilane, tetrapropoxysilane, methyltrimethoxysilane, ethyltrimethoxysilane, methyltriethoxysilane, trimethoxyisopropoxysilane, methoxytriethoxysilane, dimethyldiethoxysilane, phenyltrimethoxysilane, phenyltriethoxysilane and partially hydrolyzed polycondensation products thereof. The each may be used alone or in a mixture of two or more kinds thereof. Among them, particularly suited are silane compounds having a ketoxime group as a functional group, such as methyl-tris(methyl ethyl ketoxime)silane and vinyl-tris(methyl ethyl ketoxime)silane.

A use amount of these multifunctional silane compounds shall not strictly be restricted and can be changed according to the kind thereof and the like. In general, it falls suitably in a range of 1 to 100 parts by weight, preferably 3 to 80 parts by weight and more preferably 5 to 50 parts by weight per 100 parts by weight of a solid matter of the organopolysiloxane (a) described above.

The crosslinkable reactive functional group contained in the organopolysiloxane (a) is reacted with a hydrolyzable group contained in the silane crosslinking agent described above in the presence of a curing catalyst described later and a moisture (may be a moisture in the air) at room temperature or by heating up to about 80°C, whereby the organopolysiloxane (a) is cured. When a compound having a polymerizable unsaturated group such as a vinyl group is used as the organopolysiloxane (a) described above, the above organopolysiloxane (a) can be cured as well by irradiation with an electron beam or a UV ray. When cured by irradiation with a UV ray, the organopolysiloxane (a) is used preferably in combination with a photo polymerization initiator.

### Curing catalyst

The present invention is characterized in the first place by that the boric acid compound (c) is used as a curing catalyst which accelerates reaction between the organopolysiloxane (a) and the crosslinking agent (b) each described above.

Boric acid (orthoboric acid, metaboric acid and tetraboric acid) and borates are included in the boric acid compound (c) used in the present invention, and the above borates include, for example, alkyl esters of boric acid such as trimethyl borate, triethyl borate, tripropyl borate and tributyl borate; substituted or non-substituted phenyl esters of boric acid such as triphenyl borate and tri(4-chlorophenyl) borate; and haloalkyl esters of boric acid such as trihexafluoroisopropyl borate. Among them, particularly suited are trialkyl esters of boric acid such as trimethyl borate, triethyl borate, tri-n-propyl borate and tri-n-butyl borate.

A use amount of these boric acid compounds (c) shall not strictly be restricted. In general, it falls suitably in a range of 0.01 to 15 parts by weight, preferably 0.05 to 10 parts by weight and more preferably 0.1 to 3 parts by weight per 100 parts by weight of a solid matter of the organopolysiloxane (a) described above. If the above use amount is less than 0.01 part by weight, no catalyst ability is likely to be sufficiently displayed. On the other hand, if it is used in a large quantity exceeding 15 parts by weight, a rise in the catalyst ability meeting it is not observed, and it is rather economically disadvantageous.

In the present invention, capable of being used in combination with the boric acid compound (c) described above are organic metal catalysts such as zinc naphthenate, cobalt naphthenate, cobalt octylate, zirconium naphthenate, tetrabutyl orthotitanate, aluminum alcolate and aluminum chelate compounds; and amine base catalysts such as diethanolamine and triethanolamine.

### Silicone oil (d)

The silicone oil (d) used in the present invention is a component eluted on a surface of a coating film formed from the coating composition of the present invention to provide the coating film with an antifouling function, and an organopolysiloxane having a relatively low molecular weight is usually used.

Compounds which have so far been used in silicone rubber base antifouling coating compositions can similarly be used as the silicone oil (d), and capable of being used is at least one silicone oil selected from the group consisting of compounds represented by the following Formulas (I) and (II). In particular, the silicone oil represented by Formula (I) is suited from the viewpoints of a compatibility and a long-term antifouling property. 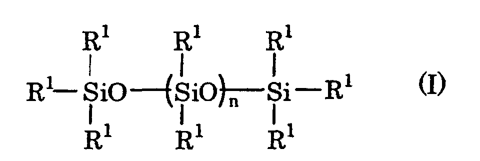 wherein R¹'s may be the same or different and each represent an alkyl group having1 to 10 carbon atoms, an aryl group, an aralkyl group or a fluoroalkyl group; and n is an integer of 0 to 400, and

Rx Si (R'Z)_{y} O_{(4-x-y)/2} (II)

wherein R represents a hydrogen atom, an alkyl group having 1 to 10 carbon atoms, an aryl group or an aralkyl group; R' represents a divalent aliphatic hydrocarbon group having 1 to 10 carbon atoms which may contain an ether bond, an ester bond or -NH- in a chain; Z represents a monovalent polar group selected from an amino group, a carboxyl group, an epoxy group and a polyoxyethylene or polyoxypropylene group which may be blocked at a single end by an alkyl group having 1 to 6 carbon atoms or an acyl group; and x and y each are 0.01≦x<3.99, 0.01≦y<3.99 and 0.02≦x + y<4.

In Formula (I) described above, R¹ is preferably methyl, phenyl or 4-trifluorobutyl, and n is an integer of 3 to 400.

The silicone oil represented by Formula (I) described above has suitably a number average molecular weight falling in a range of usually 180 to 20,000, preferably 1,000 to 10,000 and a viscosity falling in a range of 10 to 10,000 mPa·s, preferably 100 to 5,000 mPa·s. To be specific, given as representative examples thereof are dimethylsilicone oils in which R¹ is methyl, phenylmethylsilicone oils in which a part of methyls contained in these dimethylsilicone oils is substituted with phenyls and diphenylsilicone oils in which R¹ is phenyl.

In Formula (II) described above, R is representatively methyl or phenyl, and R' is preferably methylene, ethylene or propylene. Among the groups represented by Z, the polyoxyethylene or polyoxypropylene group which may be blocked at an end by an alkyl group or an acyl group having 6 or less carbon atoms is suitably the group in which a repetitive unit number of oxyethylene or oxypropylene is 10 to 60. The alkyl group for blocking the end described above includes methyl, ethyl and butyl, and the acyl group includes acetyl and propionyl.

The silicone oil represented by Formula (II) described above has suitably a number average molecular weight falling in a range of usually 250 to 30,000, preferably 1,000 to 20,000 and a viscosity falling in a range of 20 to 50,000 mPa·s, preferably 100 to 5,000 mPa·s. To be specific, the silicone oil represented by Formula (II) in which the polar group Z is an amino group includes, for example, SF8417 (product manufactured by Toray Dow Corning Co., Ltd.), ISI4700 and ISI4701 (all manufactured by Toshiba Silicone Co., Ltd.) and FZ3712 and AFL-40 (all manufactured by Nippon Unicar Co., Ltd.), and the silicone oil represented by Formula (II) in which the polar group Z is a carboxyl group includes, for example, XI42-411 (product manufactured by Toshiba Silicone Co., Ltd.), SF8418 (product manufactured by Toray Dow Corning Silicone Co., Ltd.) and FXZ3707 (product manufactured by Nippon Unicar Co., Ltd.). Also, the silicone oil represented by Formula (II) in which the polar group Z is an epoxy group includes, for example, SF8411 (product manufactured by Toray Dow Corning Silicone Co., Ltd.), ISI4730 and XI42-301 (all manufactured by Toshiba Silicone Co., Ltd.) and L-9300 and T-29 (all manufactured by Nippon Unicar Co., Ltd.). Further, the silicone oil represented by Formula (II) in which the polar group Z is a polyoxyethylene or polyoxypropylene group which may be blocked by an alkyl group or an acyl group includes, for example, ISI4460, ISI4445 and ISI4446 (all manufactured by Toshiba Silicone Co., Ltd.), SH3746, SH8400, SH3749 and SH3700 (all manufactured by Toray Dow Corning Silicone Co., Ltd.) and KF-6009 and X22-4822 (all manufactured by Shin-etsu Silicone Co., Ltd.).

A content of the silicone oil (d) described above in the coating composition of the present invention shall not strictly be restricted and falls suitably in a range of usually 30 to 200 parts by weight, preferably 50 to 150 parts by weight and more preferably 50 to 120 parts by weight per 100 parts by weight of a solid matter of the organopolysiloxane (a). If the above silicone oil (d) has a content of less than 30 parts by weight, no satisfactory long-term antifouling performance is likely to be obtained. On the other hand, if it exceeds 200 parts by weight, the coating film tends to be reduced in a strength and unable to maintain an antifouling property. Further, when it is desired to form a thick film by single coating, a content of the silicone oil (d) falls suitably in a range of usually 30 to 150 parts by weight, preferably 50 to 120 parts by weight per 100 parts by weight of a solid matter of the organopolysiloxane (a).

### Inorganic filler (e)

The coating composition of the present invention can be blended, if necessary, with the inorganic filler (e) for the purpose of elevating physical characteristics of the coating film.

The inorganic filler (e) includes, for example, silica fine powder such as wet process silica and dry process silica, quartz fine powder, aerosol titanium dioxide, diatomaceous earth, aluminum hydroxide, fine particulate alumina, magnesium oxide, zinc oxide, calcium carbonate and zinc carbonate. Further, compounds obtained by subjecting them to hydrophobic surface treatment with dimethyldichlorosilane, hexamethyldisilazane and cyclic dimethylsiloxane.

The inorganic filler (e) can be used in a range of usually 1 to 30 parts by weight, preferably 3 to 25 parts by weight and more preferably 5 to 20 parts by weight per 100 parts by weight of a solid matter of the organopolysiloxane (a).

### Antifouling coating composition

The antifouling coating composition of the present invention can be prepared by blending the components described above in the same manner as in conventional silicone rubber base antifouling coating compositions. To be specific, it can be prepared by blending the organopolysiloxane (a), the crosslinking agent (b), the boric acid compound (c) and, if necessary, the inorganic filler (e) in the substantial absence of a moisture to produce an organopolysiloxane rubber composition and then adding the silicone oil (d) to this organopolysiloxane rubber composition and blending them.

When used as the crosslinking agent (b) is a tetrafunctional alkoxysilane compound such as tetramethoxysilane, tetraethoxysilane and tetrapropoxysilane, a viscosity of the coating material tends to grow large, and therefore it is desirable in terms of a coating workability to add it after adding and blending the silicone oil (d).

The coating composition of the present invention can further be suitably blended, if necessary, with chlorinated paraffin, solid paraffin, liquid paraffin and vaseline in addition to the components described above in an amount falling in a range of about 10 parts by weight or less, preferably 9 parts by weight or less per 100 parts by weight of non-volatile matters of the above coating material. Further it can suitably be blended, if necessary, with a pigment such as a color pigment, an extender pigment and a rust preventive pigment, an organic solvent, a plasticizer, a sagging preventive, a silane coupling agent and an antifouling agent.

The coating composition of the present invention absorbs a moisture in the air and is gradually advanced in curing, and therefore it is preferably prepared immediately before using and coated as soon as possible after preparing.

The antifouling coating composition of the present invention is coated on underwater structures such as ships, port facilities, buoys, pipelines, bridges, conducting tubes in electric power stations, submarine bases, submarine oil field drilling facilities, cultivation nets and fixed shore nets to prevent underwater organisms from sticking and growing on the surfaces thereof over a long period of time. The antifouling coating composition of the present invention can be coated by single coating or repeating coating plural times by conventionally known methods. A coating film formed absorbs a moisture in the air by being left standing in the air and is advanced in curing even at room temperature, and it can be accelerated in curing, if necessary, by heating, for example, at a temperature of up to about 80°C.

A thickness of a coating film formed from the antifouling coating composition of the present invention can be changed in a wide range depending on coated articles, and it falls suitably in a range of usually 50 to 300 µm, preferably 100 to 200 µm in terms of a cured film thickness.

### Examples

The present invention shall more specifically be explained below with reference to examples. "Parts" and "%" show "parts by weight" and "% by weight" respectively.

### Preparation of organopolysiloxane rubber composition

Hydrophobicity-treated silica was added to organopolysiloxane according to a recipe shown in the following Table 1 and mixed to homogeneity in a stirring mixer, and then a crosslinking agent, a curing catalyst and a solvent were added to the resulting mixture in the absence of a moisture and mixed to homogeneity to prepare organopolysiloxane rubber compositions A to H of a room temperature curing type.

Each of the organopolysiloxane rubber compositions A to H thus obtained was coated on a glass plate by means of a brush so that a dried film thickness was about 150 µm and left standing at 20°C to check by touching with a finger, time passing until the surface of the coating film turned into a curing state, whereby a drying property of the respective compositions was evaluated. The results thereof are shown in Table 1.

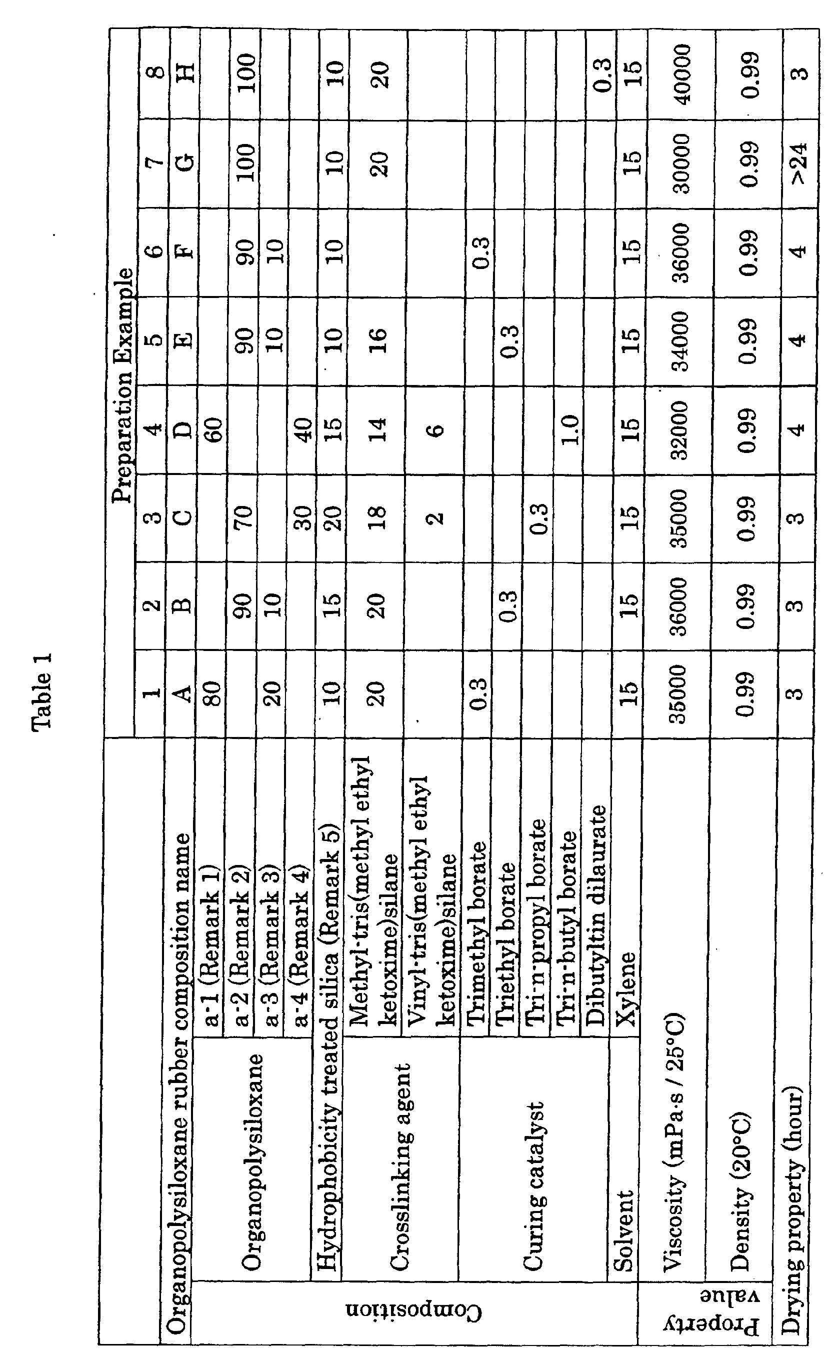

(Remark 1): polydimethylsiloxane (a-1) having hydroxyl groups at both ends: number average molecular weight 50,000
(Remark 2): polydimethylsiloxane (a-2) having hydroxyl groups at both ends: number average molecular weight 30,000
(Remark 3): polydimethylsiloxane (a-3) having hydroxyl groups at both ends: number average molecular weight 3,000
(Remark 4): polydimethylsiloxane (a-4) having hydroxyl groups at both ends: number average molecular weight 10,000
(Remark 5): hydrophobicity-treated silica: manufactured by Toray Dow Corning Silicone Co., Ltd.

### Examples 1 to 6 and Comparative Examples 1 to 3

Respective silicone oils were blended with 100 parts of the respective organopolysiloxane compositions obtained above in a proportion shown in the following Table 2, and xylene was added to control the viscosity, whereby antifouling coating compositions were obtained.

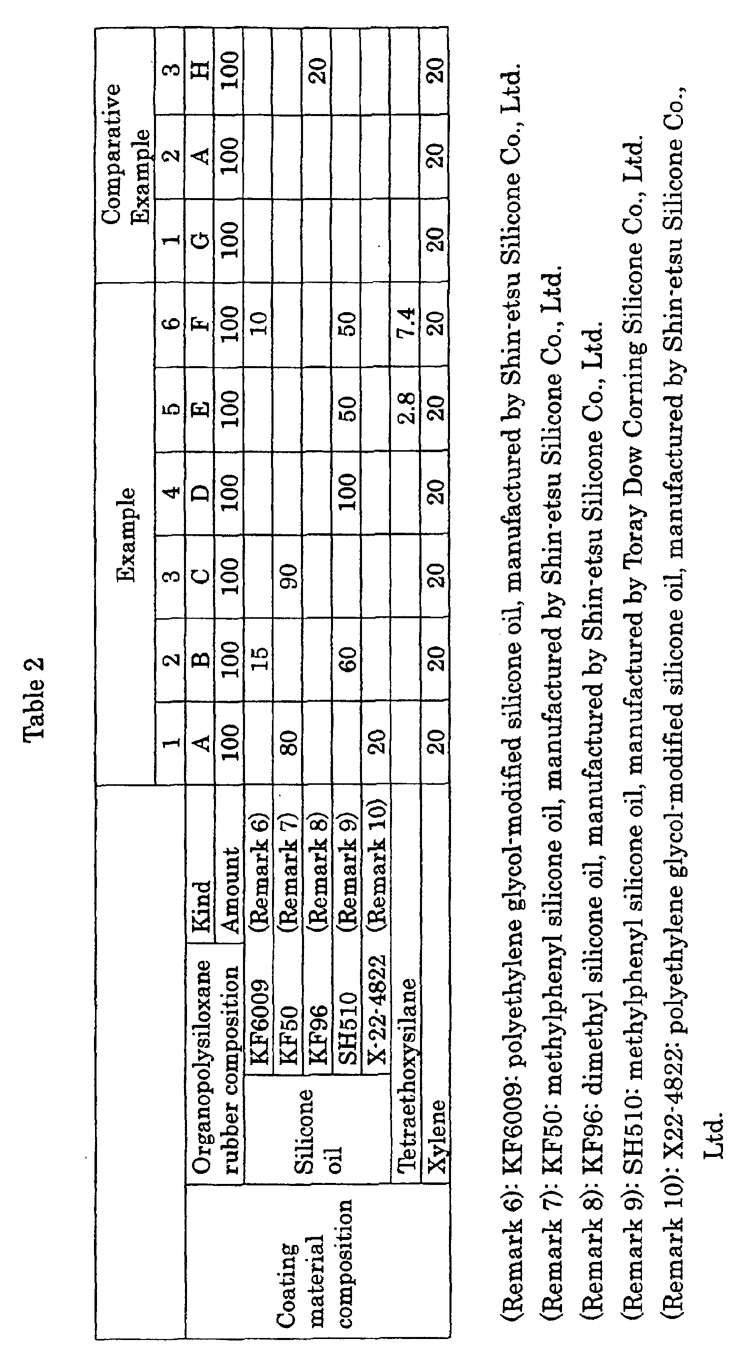

The respective antifouling coating compositions thus obtained were subjected to an antifouling test by the following method. Antifouling test method:

A zinc-rich epoxy resin base shop primer coating composition was coated on a sand blast-treated steel plate having a size of 100 × 300 × 2 mm so that a dried film thickness was 15 µm, and an epoxy resin base heavy duty corrosion proofing coating composition was coated thereon so that a dried film thickness was 200 µm to obtain a coated plate, which was used as an article for coating. The antifouling coating composition was coated on a face for coating in this plate by means of a brush so that a dried film thickness was 150 µm and dried to form an antifouling coated plate. Then, this coated plate was vertically immersed in seawater of Orido bay (Simizu city, Shizuoka prefecture), and the plate was pulled up after 6 months, 12 months, 18 months and 24 months to visually observe a degree of adhesion of submarine organisms. The results thereof are shown in Table 3.

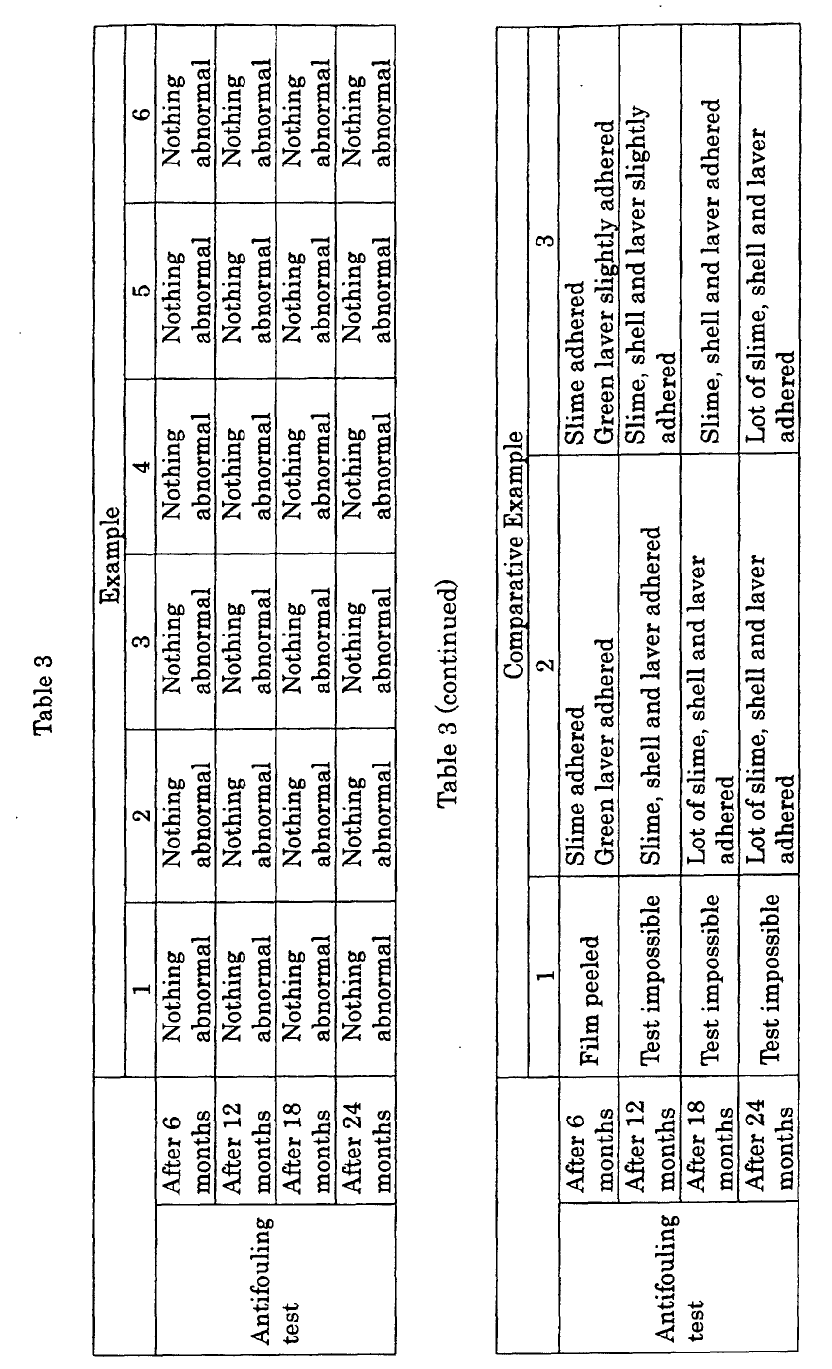

### Industrial Applicability

The coating composition of the present invention is an antifouling coating composition which uses a nontoxic boric acid compound as a curing agent and has no problem on environmental contamination and which has a good curing property, and it can advantageously be used for preventing underwater organisms from sticking on underwater structures over a long period of time.

## Claims

1. An antifouling coating composition comprising (a) an organopolysiloxane having a crosslinkable reactive functional group, (b) a crosslinking agent, (c) a boric acid compound as a curing catalyst and (d) a silicone oil having a number average molecular weight of 180 to 30,000 and a viscosity of 10 to 50,000 mPa·s.

2. The composition as described in Claim 1, wherein the organopolysiloxane (a) comprises a combination of an organopolysiloxane (a-1) having a number average molecular weight falling in a range of 20,000 to 100,000 and an organopolysiloxane (a-2) having a number average molecular weight falling in a range of 500 to 20,000.

3. The composition as described in Claim 2, wherein a weight ratio of organopolysiloxane (a-1)/organopolysiloxane (a-2) falls in a range of 5/95 to 95/5.

4. The composition as described in Claim 1, wherein the crosslinking agent (b) is a multifunctional silane compound having in a molecule, at least two functional groups which react with a crosslinkable reactive functional group contained in the organopolysiloxane (a).

5. The composition as described in Claim 4, wherein the multifunctional silane compound has a ketoxime group as a functional group.

6. The composition as described in Claim 1, comprising the crosslinking agent (b) in an amount falling in a range of 1 to 100 parts by weight per 100 parts by weight of a solid matter of the organopolysiloxane (a).

7. The composition as described in Claim 1, wherein the boric acid compound (c) is selected from the group consisting of boric acid and borate.

8. The composition as described in Claim 7, wherein the borate is trialkyl borate.

9. The composition as described in Claim 7, wherein the borate is selected from the group consisting of trimethyl borate, triethyl borate, tripropyl borate, tributyl borate, triphenyl borate, tri(4-chlorophenyl) borate and trihexafluoroisopropyl borate.

10. The composition as described in Claim 1, comprising the boric acid compound (c) in an amount falling in a range of 0.01 to 15 parts by weight per 100 parts by weight of a solid matter of the organopolysiloxane (a).

11. The composition as described in Claim 1, wherein the silicone oil (d) is selected from the group consisting of compounds represented by the following Formulas (I) and (II): 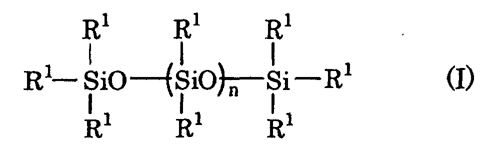 wherein R¹'s may be the same or different and each represent an alkyl group having1 to 10 carbon atoms, an aryl group, an aralkyl group or a fluoroalkyl group; and n is an integer of 0 to 400, and
Rx Si (R'Z)_{y} O_{(4-x-y)/2} (II)
wherein R represents a hydrogen atom, an alkyl group having 1 to 10 carbon atoms, an aryl group or an aralkyl group; R' represents a divalent aliphatic hydrocarbon group having 1 to 10 carbon atoms which may contain an ether bond, an ester bond or -NH- in a chain; Z represents a monovalent polar group selected from an amino group, a carboxyl group, an epoxy group and a polyoxyethylene or polyoxypropylene group which may be blocked at a single end by an alkyl group having 1 to 6 carbon atoms or an acyl group; and x and y each are 0.01≦x<3.99, 0.01≦y<3.99 and 0.02≦x + y<4.

12. The composition as described in Claim 1, comprising the silicone oil (d) in an amount falling in a range of 30 to 200 parts by weight per 100 parts by weight of a solid matter of the organopolysiloxane (a).

13. The composition as described in Claim 1, further comprising an inorganic filler (e).

14. The composition as described in Claim 1, comprising the inorganic filler (e) in an amount falling in a range of 1 to 30 parts by weight per 100 parts by weight of a solid matter of the organopolysiloxane (a).

15. An underwater structure coated with the antifouling coating composition as described in Claim 1.
